(19) **Europäisches Patentamt / European Patent Office / Office européen des brevets**

(11) **EP 1 979 717 B1**

(12) **FASCICULE DE BREVET EUROPEEN**

(45) Date de publication et mention
de la délivrance du brevet:
**14.07.2010 Bulletin 2010/28**

(21) Numéro de dépôt: **07731505.9**

(22) Date de dépôt: **23.01.2007**

(51) Int Cl.:
***G01D 9/00*** *(2006.01)*   ***G06F 11/273*** *(2006.01)*

(86) Numéro de dépôt international:
**PCT/FR2007/050676**

(87) Numéro de publication internationale:
**WO 2007/085756 (02.08.2007 Gazette 2007/31)**

(54) **DISPOSITIF ET PROCEDE DE SURVEILLANCE D'UNE GRANDEUR ENVIRONNEMENTALE EN TEMPS REEL**

VORRICHTUNG UND VERFAHREN ZUR ECHTZEITÜBERWACHUNG EINER UMWELTGRÖSSE

DEVICE AND METHOD FOR REAL-TIME OF MONITORING AN ENVIRONMENTAL QUANTITY

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **30.01.2006 FR 0650326**

(43) Date de publication de la demande:
**15.10.2008 Bulletin 2008/42**

(73) Titulaires:
• **European Aeronautic Defence and Space Company -
EADS France
75016 Paris (FR)**
• **EADS CCR Groupement d'Intérêt Economique
75016 Paris (FR)**

(72) Inventeurs:
• **FOUCHER, Bruno
F-92320 Chatillon (FR)**
• **ROUET, Vincent
F-78630 Orgeval (FR)**

(74) Mandataire: **Schmit, Christian Norbert Marie
Schmit-Chretien-Schihin
8, place du Ponceau
95000 Cergy (FR)**

(56) Documents cités:
**DE-A1- 10 154 482    DE-A1- 10 255 288
FR-A- 2 844 902    US-A- 5 600 576**

EP 1 979 717 B1

**Description**

*Domaine de l'invention*

La présente invention a pour objet un dispositif et un procédé de surveillance en temps réel d'une grandeur environnementale d'un système. La présente invention trouve des applications particulièrement avantageuses, mais non exclusives, dans le domaine de l'aéronautique, du nucléaire, du naval, de l'automobile, de la pétrochimie....

Un but de l'invention est d'optimiser la maintenance d'un système sous surveillance en déterminant en temps réel la défaillance dudit système.

Un autre but de l'invention est d'embarquer le dispositif de surveillance dans le système à surveiller.

L'invention a également pour but de déterminer en temps réel la durée de vie consommée du système sous surveillance.

*Etat de la technique*

Actuellement, le diagnostic d'un système sous surveillance, qui peut être une carte électronique, est réalisé par un dispositif d'enregistrement de grandeurs environnementales. Ce dispositif est connu sous le nom anglais " Time Stress Measurement Device, TMSD ". Un tel dispositif est décrit dans le document FR - A1- 2 844 902. Ce dispositif comporte deux ensembles. Le premier ensemble est embarqué dans le système à surveiller. Et, le deuxième ensemble se situe en dehors du système à surveiller.

Le premier ensemble mesure au cours du temps des grandeurs environnementales ou factuelles, du système à surveiller, tels que la température, l'humidité, les vibrations, les chocs.... Le premier ensemble comporte une mémoire permettant d'enregistrer les grandeurs mesurées. Après avoir obtenu un profil complet des grandeurs enregistrées, pouvant durer plusieurs jours, ces mesures mémorisées sont transférées sous forme numérique vers le deuxième ensemble, qui est une unité de traitement. Le deuxième ensemble analyse les grandeurs enregistrées par le premier ensemble afin de fournir un diagnostic du système. En effet, de l'ensemble de ces grandeurs enregistrées, l'unité de traitement extrait des informations sur la durée de vie consommée du système à surveiller dont les modes de défaillance et leurs impacts sont préalablement connus. Avec ce type de dispositif, l'exploitation des mesures mémorisées est externe au premier ensemble.

Cependant, un tel dispositif d'enregistrement de grandeurs environnementales présente des inconvénients. En effet, avec ce type de dispositif, il est nécessaire d'obtenir d'abord un profil complet des grandeurs mesurées et enregistrées avant que l'unité de traitement puisse déterminer des défaillances du système sous surveillance. Ce profil complet nécessite un taux de données préalablement déterminé et nécessaire à l'analyse par l'unité de traitement.

Dans un exemple, lorsque le système à surveiller est une carte électronique embarquée dans un avion, les données enregistrées ne sont récupérées et analysées par l'unité de traitement que lorsqu'un profil complet est obtenu. Par exemple, un profil complet peut être obtenu après quinze allers et retours de l'avion. Ainsi un laps de temps assez important est observé avant que les données enregistrées ne soit transférées vers l'unité de traitement. Les résultats fournis par l'unité de traitement ne sont pas immédiats. En effet, la quantité de données à analyser est telle qu'il faut compter plusieurs jours avant d'obtenir un pourcentage de durée de vie consommée du système à surveiller. Par conséquent, ce résultat sur les défaillances de la carte électronique sous surveillance n'est plus approprié, lors de leur obtention. Car pendant les jours nécessaires à l'unité de traitement pour fournir un résultat, la carte électronique peut être défectueuse sans que cette défaillance soit détectée.

Actuellement, une carte électronique défectueuse ne sera ni détectée ni remplacée, avant l'obtention et l'analyse du profil complet. Ainsi, l'avion avec ce type de dispositif a le temps d'effectuer, au moins, un trajet avec une pièce défectueuse avant que l'unité de traitement ne fournissent les résultats permettant de le détecter. Alors que le non remplacement d'une pièce défectueuse en temps utile peut avoir des répercussions lourdes de conséquence lorsque l'on parle d'aéronautique, de naval, d'automobile....

En outre avec ce type de dispositif le flux de données pour obtenir le profil complet est très important. De ce fait l'unité de traitement comporte des algorithmes très complexes destinés au traitement de ces données déportées. L'unité de traitement comporte un algorithme normalisé de simplification des données, connu sous le nom anglais "Ordered Overall Range, OOR". L'unité de traitement comporte également un algorithme normalisé de comptage de cycles connu sous le nom anglais "Rainflow". Avec ces algorithmes, il est impératif d'avoir l'ensemble des données nécessaires à l'obtention d'un profil complet, pour fonctionner.

Avec ce type d'algorithmes, les besoins en ressources de calcul ainsi que les besoins en ressources en mémoire sont relativement importants. La réalisation d'un tel dispositif demande ainsi la mise en oeuvre de technologies onéreuses, du fait de spécifications exigeantes. Cette technologie onéreuse augmente le coût global dudit dispositif.

De plus, les algorithmes existants de l'unité de traitement ne peuvent pas être utilisés en environnement embarqué. Car, ils sont tellement complexes qu'ils ne peuvent satisfaire les contraintes liées aux ressources limitées en environnement embarqué tels que la faible puissance de calcul, la rapidité et la faible capacité en mémoire. Ces algorithmes sont également inutilisables en environnement embarqué du fait qu'il faut attendre d'avoir un profil complet avant de pouvoir les appliquer. Ils ne peuvent donc pas être appliqués à chaque nouvelle mesure afin de permettre une gestion en temps réel.

*Exposé de l'invention*

L'invention a justement pour but de remédier aux inconvénients des techniques exposées précédemment. Pour cela, l'invention propose un dispositif et un procédé de surveillance d'une grandeur environnementale en temps réel. Le dispositif de l'invention comporte une intelligence embarquée permettant de diagnostiquer l'état de santé du système sous surveillance en temps réel, optimisant ainsi la maintenance dudit système. Pour ce faire, l'invention a développé un nouveau dispositif d'enregistrement dont le premier ensemble de mesure et de mémorisation et le deuxième ensemble d'analyse sont tous les deux embarqués dans le système sous surveillance. Par conséquent, l'invention a développé de nouveaux algorithmes prenant en compte les contraintes liées aux ressources limitées en environnement embarqué tels que la faible puissance de calcul, la rapidité et la faible capacité en mémoire.

Les algorithmes de l'invention permettent d'aboutir à un résultat identique à celui fourni par les algorithmes normalisés, de l'état de la technique, pour une même série de données, et ceci pour un coût quasiment nul. Ils sont utilisables en temps réel et ne nécessitent que peu de ressources du microcontrôleur et une faible puissance en calcul. La présente invention remédie ainsi à ces problèmes de technologie onéreuse.

L'invention comporte trois différents algorithmes appliqués à chaque nouvelle mesure. Le premier des algorithmes est apte à simplifier les données mesurées, le deuxième des algorithmes est apte à compter des cycles à partir des données simplifiées et le troisième des algorithmes est apte à définir la durée de vie consommée du système à partir de chaque cycle compté, dont les modes de défaillance et leurs impacts sont préalablement connus.

Avec l'invention, chaque nouvelle mesure effectuée est automatiquement traitée. Ceci permet une mise à jour automatique du résultat sur les défaillances du système.

En outre, le dispositif de l'invention est un dispositif non dédié à une application précise. Il peut s'adapter de manière simple à n'importe quel type d'applications. Il peut être utilisé dans de nombreuses applications ayant des contraintes environnementales très différentes.

Plus précisément, l'invention a pour objet un dispositif de surveillance des valeurs d'une grandeur environnementale d'un environnement environnant un système comportant :

- un capteur pour effectuer des mesures de ces valeurs,
- un circuit pour transmettre ces mesures,
- une unité de traitement comportant un microprocesseur et une mémoire programme pour recevoir ces mesures, et traiter ces mesures afin de déterminer une durée de vie consommée du système, cette durée de vie consommée résultant de l'environnement auquel est soumis le système, **caractérisé en ce qu'**il comporte :
- des moyens de transmission, en temps réel, de chaque mesure à l'unité de traitement, et en ce que
- l'unité de traitement est embarquée, et comporte des moyens de simplification des mesures transmises,
- des moyens de détermination de cycles à partir des mesures ainsi simplifiées, et
- des moyens de calcul, en temps réel, d'une durée de vie consommée du système, à partir des cycles ainsi déterminés.

Selon des modes de réalisation non limitatifs, le dispositif selon l'invention comporte les caractéristiques supplémentaires suivantes :

- les moyens de simplification comportent des moyens pour filtrer les mesures transmises afin de détecter des extremums.
- l'unité de traitement comporte trois mémoires tampons.
- le capteur est un capteur de température.
- le capteur est un accéléromètre.- le capteur est une jauge de contrainte.
- l'unité de traitement comporte, dans les moyens de calcul :
- une mémoire préconfigurée pour convertir les cycles déterminés en valeur d'endommagement,
- des moyens pour cumuler les valeurs d'endommagements, et
- des moyens pour avertir ou interpréter ou alarmer en fonction du cumul.
- la mémoire préconfigurée est composée de lignes représentant par leur adresse une valeur moyenne du cycle et dé colonnes représentant par leur adresse une différence des valeurs extrêmes formant le cycle, l'intersection des lignes et des colonnes fournissant un nombre de cycles à défaillances, convertible en valeurs d'endommagements qui est inverse du nombre de cycles à défaillance.
- le dispositif comporte des moyens d'affichage permettant de visualiser sur un écran une somme de valeurs d'endommagements.

L'invention concerne également un procédé de fonctionnement d'un dispositif de surveillance des valeurs d'une grandeur environnementale d'un environnement environnant un système dans lequel,

- on effectue des mesures de ces valeurs,
- on transmet ces mesures à une unité de traitement,
- on traite ces mesures transmises afin de déterminer une durée de vie consommée du système, cette durée de vie résultant de l'état environnant auquel est soumis le système,

**caractérisé en ce que** le procédé comporte les étapes suivantes :

- on transmet en temps réel chaque mesure à l'unité de traitement,
- on détecte seulement des extremums temporairement locaux, maximums ou minimums, parmi les mesures transmises,
- pour chaque extremum local ainsi détecté, on recherche un cycle, un cycle étant formé par une suite de mesures se succédant d'un minimum à un maximum ou l'inverse,
- on convertit chaque cycle détecté en une valeur d'endommagement,
- on additionne les valeurs d'endommagements pour déterminer la durée de vie consommée du système.

Selon des modes de réalisation non limitatifs, le procédé selon l'invention comporte les caractéristiques supplémentaires suivantes :

- pour détecter un extremum local :
- on acquiert une nouvelle mesure,
- on considère deux mesures précédentes acquises avant cette dernière mesure, ainsi qu'une mesure antérieure identifiée, elle, comme étant un extremum,
- on calcule une moyenne dite précédente des deux mesures précédentes,
- on calcule une moyenne dite nouvelle des deux dernières mesures acquises,
- on calcule une pente dite précédente correspondant à la différence entre la moyenne de la mesure antérieure et de la plus ancienne mesure précédente et la moyenne des deux mesures précédentes,
- on calcule une pente dite nouvelle correspondant à la différence de la moyenne précédente et de la moyenne nouvelle,
- on produit un extremum maximum, lorsque le signe de la pente précédente est négatif et le signe de la pente nouvelle est positif,
- sinon, on produit un extremum minimum,
- on valide cet extremum produit, lorsque la différence entre cet extremum produit et l'extremum antérieur est supérieure à une valeur donnée de la grandeur environnementale à surveiller,
- sinon, on mémorise temporairement l'extremum produit pour servir à titre d'extremum antérieur dans une comparaison avec un prochain extremum.
- on définit qu'un demi-cycle est formé par deux extremums validés consécutifs,
- lorsque au moins deux demi-cycles sont stockés dans des mémoires tampons, et que
- la différence des extremums constituant un dernier demi-cycle est supérieure à la différence des extremums constituant un demi-cycle précédent,
- alors on comptabilise le demi-cycle précédent comme étant un cycle,
- on supprime ce cycle comptabilisé, des demi-cycles,
- sinon, ces deux demi-cycles sont stockés dans les mémoires tampons.
- pour convertir un cycle en une valeur d'endommagement :
- on calcule une moyenne des extremums constituant un cycle comptabilisé,
- on calcule une différence des extremums constituant le cycle,
- on lit au moyen d'une mémoire contenant une matrice de cycles à défaillances préalablement définie, à l'intersection de la moyenne du cycle représentant par leur adresse des lignes de la mémoire et de la différence des extremums du cycle représentant par leur adresse des colonnes de la mémoire, le nombre total de cycles de ce type conduisant à la défaillance, et dont on déduit la valeur d'endommagement du cycle.
- on calcule une durée de vie consommée optimiste du système en additionnant seulement les valeurs d'endommagements des cycles comptabilisés,
- on calcule une durée de vie consommée pessimiste du système en additionnant, d'une part les valeurs d'endommagements des cycles comptabilisés, et, d'autre part les valeurs d'endommagements des demi-cycles résiduels.

*Brève description des dessins*

L'invention sera mieux comprise à la lecture de la description qui suit et à l'examen des figures qui l'accompagnent. Celles-ci sont présentées à titre indicatif et nullement limitatif de l'invention.

La figure 1 montre une représentation schématique d'un dispositif de mesure automatique muni des moyens perfectionnés de l'invention ;
La figure 2 montre une illustration des étapes, dans un mode de réalisation, du procédé selon l'invention,
La figure 3 montre une illustration des étapes, dans un mode de réalisation, du filtrage des données mesurés, selon l'invention,
La figure 4 montre dans un graphe une mise en oeuvre des étapes du procédé de filtrage de la figure 3, selon l'invention,
La figure 5a montre dans un graphe l'allure des données mesurées par le capteur,
La figure 5b montre dans un graphe l'allure des données mesurées et simplifiées, selon l'état de la technique,
Les figures 5c et 5d montrent dans un graphe l'allure des données mesurées et simplifiées, selon l'invention, pour différents seuils,
Les figures 6a et 6b montrent dans un graphe un premier cas de comptage de cycles à partir des données simplifiées, selon l'invention,
Les figures 7a et 7b montrent dans un graphe un deuxième cas de comptage de cycles à partir des données simplifiées, selon l'invention.

*Description détaillée de modes de réalisation de l'invention*

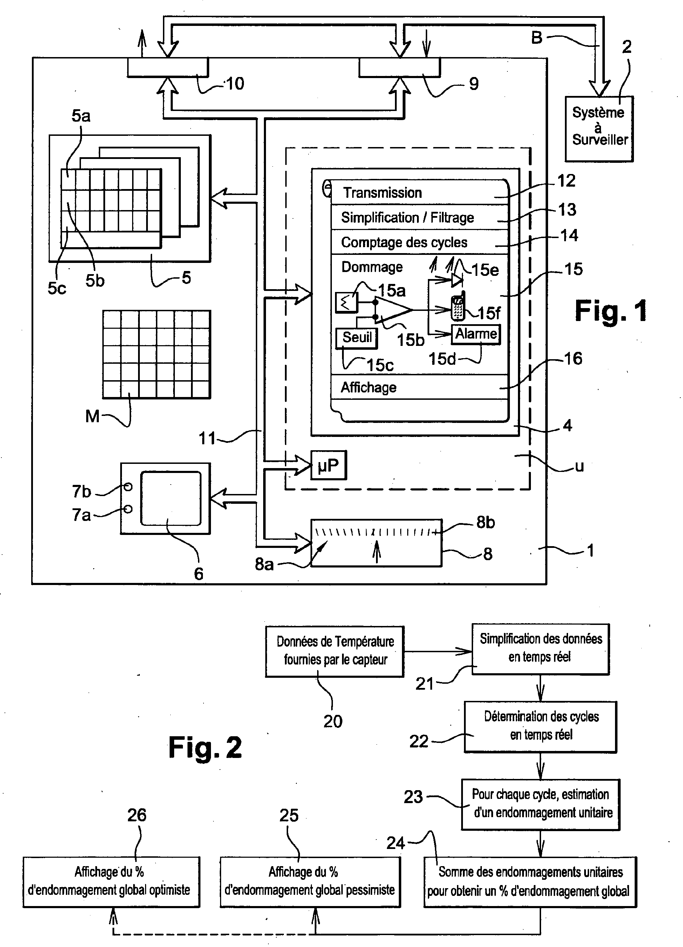

La figure 1 montre une représentation schématique d'un dispositif 1 de surveillance en temps réel; embarqué dans un système 2 à surveiller. Le dispositif 1 est une intelligence embarquée permettant de diagnostiquer l'état de santé du système 2.

Dans l'exemple de la figure 1 et dans le reste de la description, le système à surveiller est une carte électronique embarquée au bord d'un avion. Dans l'invention, le dispositif 1 de surveillance mesure et analyse de manière instantanée une grandeur environnementale du système 2. Dans l'exemple de la figure 1, la grandeur environnementale mesurée et analysée est une température du système 2. Le dispositif 1 surveille ainsi les cycles thermiques auquel est soumise la carte électronique. Bien entendu, d'autres types de grandeurs environnementales tel que notamment l'humidité, la pression, le choc peuvent être mesurés.

Le dispositif 1 est souvent réalisé sous forme de circuit intégré. Il comporte une unité de traitement. Cette unité de traitement comporte un microprocesseur 3 et une mémoire programme 4. Le microprocesseur 3 est relié à la mémoire programme 4, à une mémoire de donnée 5, à un écran 6, a deux boutons poussoirs 7a et 7b, à au moins un capteur 8, à une mémoire contenant la matrice de cycles à défaillances M et à des interfaces d'entrée et sortie 9 et 10, par l'intermédiaire d'un bus de communication 11.

Dans une variante, l'unité de traitement est embarquée dans le système sans pour autant être intégrée dans le dispositif, comme c'est le cas de la figure 1. La mémoire de donnée 5 comporte dans un mode de réalisation préféré, trois mémoires tampons tournantes 5a, 5b, 5d. Ces mémoires tampons 5a, 5b, 5d seront décrites ultérieurement.

Le dispositif 1 est alimenté en énergie par une batterie autonome, non représentée. Cette batterie est de préférence rechargeable. Lorsque la batterie est à changer, avant la destruction du système 2 à surveiller, les données concernants la durée de vie consommée peuvent être conservées dans une mémoire non volatile.

L'écran 6 du dispositif 1 est dans un exemple préféré composé de deux afficheurs 7 segments. Les deux afficheurs 7 segments disposent de 7 segments et d'un point décimal. Les segments ou les points servant à la représentation de symboles alphanumériques des afficheurs sont des diodes électroluminescentes.

Les deux boutons poussoirs 7a et 7b sont des pièces saillantes sur laquelle on appuie pour déclencher un affichage du pourcentage de durée de vie consommée du système 2 sur l'écran 6. Le bouton poussoir 7a permet l'affichage d'un pourcentage de vie pessimiste du système, lorsque l'on appuie dessus. Le bouton poussoir 7b permet l'affichage d'un pourcentage de vie optimiste du système, lorsque l'on appuie dessus. Dans une variante, le dispositif peut comporter un seul bouton poussoir, et par des appuis successifs, on obtient soit le pourcentage de la durée de vie optimiste soit le pourcentage de la durée de vie pessimiste du système 2, soit l'arrêt de l'affichage pour diminuer la consommation de courant.

Le dispositif 1 émet par l'interface de sortie 10, l'ordre de mesure au capteur 8. Il reçoit par l'interface d'entrée 9 la mesure réalisée par le capteur 8. Le capteur 8 mesure une valeur physique 8b d'une grandeur environnementale 8a. Il transmet cette mesure au microprocesseur 3 sous forme de signaux électriques par l'intermédiaire d'un bus série B. Le capteur 8 est dans l'exemple de la figure 1 un capteur de température. Il mesure ainsi une valeur 8b de température 8a.

Le capteur 8 de température peut être remplacé par d'autres types de capteurs existants. En fonction des différents modes de réalisation de l'invention, le dispositif 1 peut comporter autant de capteur 8 qu'il est nécessaire pour mettre en oeuvre l'application. Le capteur de température 8 peut être situé sur le système 2 à surveiller.

Dans la pratique, lorsque l'on prête une action au dispositif 1, celle-ci est réalisée par le microprocesseur 3 du dispositif 1 commandé par des codes instructions enregistrés dans la mémoire de programme 4 du dispositif 1.

La mémoire 4 de programme est divisée en plusieurs zones, chaque zone correspondant à des codes instructions pour réaliser une fonction du dispositif 1. La mémoire 4 comporte une zone 12 comportant des codes instructions pour la mise en oeuvre de l'acquisition des mesures effectuées par le capteur 8. La mémoire 4 comporte une zone 13 comportant des codes instructions pour appliquer, à chaque mesure acquise, l'algorithme de simplification des données afin de déterminer des extremums. La mémoire 4 comporte une zone 14 comportant des codes instructions pour appliquer à chaque extremum déterminé l'algorithme de comptage de cycles afin de déterminer les cycles thermiques auquel est soumis le système 2. La mémoire 4 comporte une zone 15 comportant des codes instructions pour appliquer l'algorithme de calcul de la durée de vie consommée du système 2 à partir des cycles déterminés.

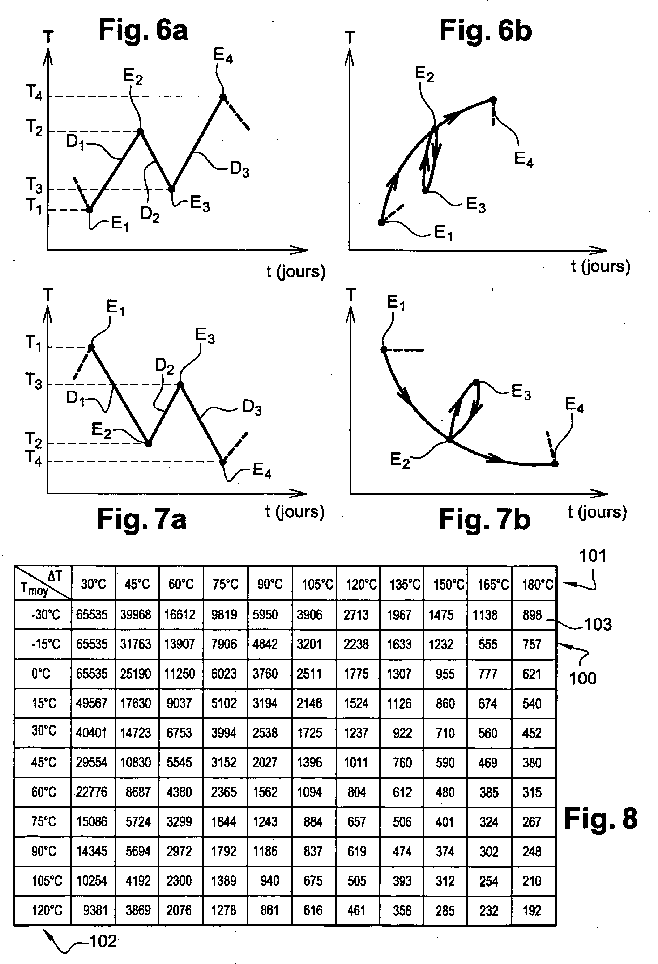

Cette zone 15 de calcul de dommage convertit chaque cycle déterminé en une valeur d'endommagement égale à l'inverse du nombre de cycles à défaillances tel que donné à la figure 8, au moyen de la mémoire contenant la matrice de cycles à défaillances M. Elle effectue un cumul 15a de ces valeurs d'endommagement. Ce cumul 15a est transmis par le dispositif 1 à une première entrée d'un comparateur 15b. Ce comparateur 15b reçoit à une deuxième entrée un seuil 15c préalablement défini d'endommagement maximal du système 2. Dès que le cumul 15a des valeurs d'endommagement est supérieur au seuil 15c, alors le dispositif déclenche un avertissement, permettant ainsi d'optimiser la maintenance du système. Cet avertissement peut être le déclenchement d'une alarme sonore 15d, et/ou le déclenchement d'une alarme visuel 15e et/ou l'envoi d'un message à un opérateur 15f. L'envoi de ce message peut être transmis au moyen de protocole de communication sans fils, tels que la norme UMTS ou la norme GSM, etc....

La mémoire 4 comporte une zone 16 comportant des codes instructions pour afficher sur l'écran 6 un pourcentage de durée de vie consommé du système, en fonction des boutons poussoirs 7a et 7b.

La figure 2 montre une illustration des étapes de fonctionnement des moyens illustrés à la figure 1, selon l'invention. Pour le reste de la description, la grandeur environnementale décrite est la température en sachant qu'elle peut être remplacée par d'autres types de grandeurs environnementales existantes.

La figure 2 montre une étape 20 préliminaire dans laquelle, les mesures de valeurs fournies par le capteur 8 sont transmises au dispositif 1. Pour chaque mesure transmise, le dispositif applique les étapes 21 à 26. Le mode de traitement de l'invention est tel que les mesures transmises sont traitées immédiatement après leur transmission. En outre, le temps d'attente qui sépare l'entrée des mesures transmise aux résultats est réduit au minimum.

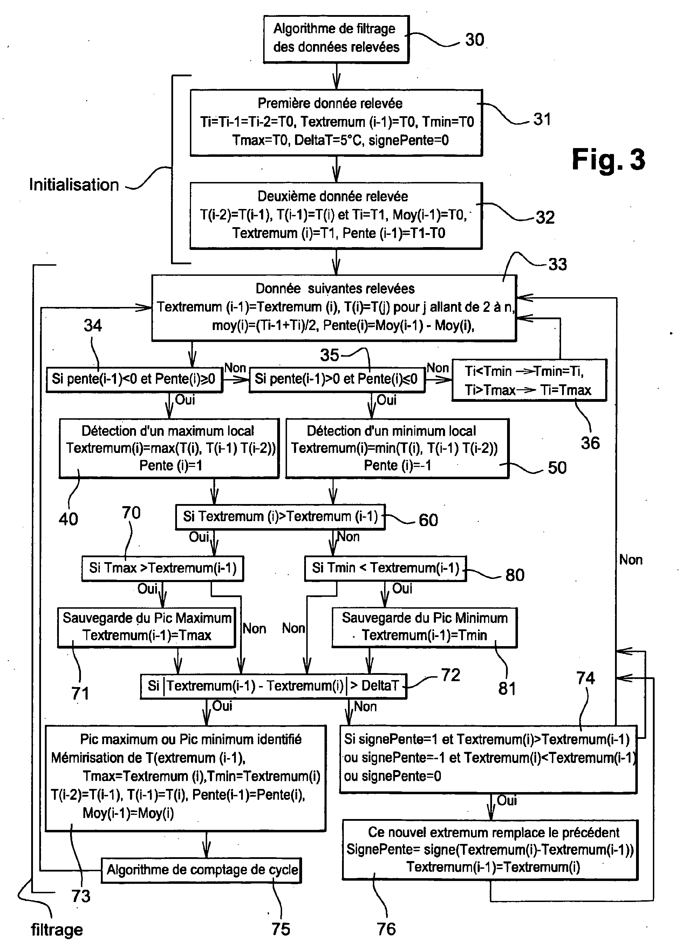

A l'étape 21, le dispositif applique l'algorithme de simplification à chaque mesure transmise par le capteur 8 au dispositif 1. Comme il sera décrit à la figure 3, l'algorithme de simplification met en oeuvre des moyens techniques ou autres en vue de détecter des extremums. Cet algorithme est une méthode de filtrage qui consiste à absorber les mesures ne représentant pas un extremum.

Dans un exemple préféré, l'algorithme recherche un extremum pour chacunes des trois dernières mesures transmises. L'extremum est un maximum ou un minimum. Ainsi, l'algorithme de simplification des données permet d'obtenir un profil simplifié des mesures transmises. Ce profil simplifié est constitué de pic minimum et de pic maximum successifs. Ce profil simplifié peut être obtenu sur la base d'un filtre passe bas avec un seuil de filtrage préalablement défini. Le dispositif considère que deux extremums consécutifs forme un demi-cycle.

L'algorithme de simplification permet de diminuer le nombre de mesures transmises sur lesquelles seront appliquées l'algorithme de calcul de durée de vie. Avec cet algorithme, seules les informations pertinentes sont conservées.

Dans une variante, la fonctionnalité d'enregistrement du dispositif d'enregistrement TSMD peut être utilisée si nécessaire, en enregistrant l'évolution de l'environnement en parallèle de l'application des algorithmes de l'invention. Dans ce cas, le dispositif TMSD n'enregistre que le profil simplifié de la grandeur mesurée, réduisant ainsi de manière considérable le temps nécessaire à l'unité de traitement pour fournir des résultats.

A l'étape 22, le dispositif applique l'algorithme de comptage de cycles à chaque extremum détecté. Un cycle est l'ensemble des états ou des valeurs par lequel passe, dans un ordre déterminé qui peut être répété, une valeur de la grandeur du système. Dans l'invention, un cycle est déterminé par des règles prédéfinis. De par ces règles, le dispositif est apte à déterminer lorsque deux demi-cycles forment un cycle, comme le montre les figures 6a et 7a. Avec l'invention, l'algorithme de comptage de cycles a besoin de peu de ressources en mémoire, pour fonctionner de manière optimale et en temps réel.

A l'étape 23, le dispositif applique l'algorithme de calcul de la durée de vie consommée du système à surveiller. L'estimation de cette durée de vie s'effectue par une connaissance d'une mémoire contenant une matrice de cycles à défaillances qui est obtenue par simulation. Pour chaque cycle déterminé, le dispositif détermine par rapport à la mémoire contenant la matrice de cycles à défaillances une valeur d'endommagement. Cette étape 23 sera décrite à la figure 8.

A l'étape 24, lorsque la somme des endommagements vaut au plus 1, la carte est défaillante. Il est bien évident

que les indications données par les calculs des mémoires de dommage sont à considérer par rapport à un ordre de grandeur, et que, par conséquent, la maintenance du système surveillé devra avoir lieu bien avant que l'estimation de durée de vie consommée donnée par le dispositif n'atteigne la valeur 1.

Dans l'invention, la mémoire contenant une matrice de cycles à défaillances est intégrée de manière dynamique dans le dispositif, de préférence, lors de la configuration. Ainsi, selon la grandeur environnementale du système à surveiller, une série de simulations de ce système est réalisée de manière à constituer une mémoire de dommage. Cette mémoire a comme paramètres, dans un exemple, une différence de température et une température moyenne de cycles thermiques, comme montré à la figure 8.

A l'étape 25, le bouton poussoir 7b est appuyé et le résultat du calcul de la durée de vie sous forme d'un pourcentage est affiché sur l'écran. Ce résultat tient compte uniquement des cycles entiers identifiés et génère un résultat optimiste sur l'état de santé du système surveillé.

A l'étape 26, le bouton poussoir 7a est appuyé et le résultat du calcul de la durée de vie sous forme d'un pourcentage est affiché sur l'écran. Ce résultat tient compte des cycles entiers identifiés ainsi que des demi-cycles résiduels et génère un résultat pessimiste sur l'état de santé du système surveillé. Ce résultat est pessimiste car il est supérieur à l'endommagement réel du système à surveiller.

La Fig. 3 montre une étape 30 préliminaire dans laquelle le dispositif applique l'algorithme de simplification des mesures de température relevées par le capteur. Cet algorithme de simplification est appliqué à chaque nouvelle mesure de température tout en faisant intervenir les deux mesures précédentes, ainsi que la dernière mesure identifiée comme étant un extremum. Cet extremum est un maximum ou un minimum.

A l'étape 31, le dispositif initialise des paramètres de température utilisés par l'algorithme de simplification. Ces paramètres de température sont notamment :

- les deux mesures de températures précédentes T(i-1) et T(i-2),
- la dernière mesure de températures T(i),
- la dernière mesure de température identifiée comme étant un extremum Text (i-1),
- les températures minimales Tmin et maximales Tmax entre deux extremums consécutifs.

L'algorithme de simplification comporte également un paramètre représentant un signe de la pente SignePente entre les deux derniers extremums identifiés.

Lors de l'initialisation, Le dispositif définit un seuil Delta T. Dans l'exemple de la figure 3, ce seuil Delta T est de l'ordre de 5 degrés celsius. Le dispositif acquiert une première donnée de mesure de la température T0, ainsi le paramètre T(i) reçoit la mesure T0. Les paramètres de température sont initialisés avec la mesure T0. Et, le paramètre SignePente est nul.

A l'étape 32, le dispositif acquiert une deuxième donnée de mesure de la température T1. Dans ce cas, le paramètre T(i) reçoit la mesure de la température T1. Le dispositif définit un paramètre représentant la moyenne calculée précédemment Moy(i-1) comme étant égale à T0. Le dispositif définit la température d'un extremum Text(i) comme étant égale à T1. Il calcule également une pente P(i-1) correspondant ici à la différence des températures T1 et T0.

L'étape 31 et l'étape 32 constitue la partie d'initialisation de l'algorithme de simplification des mesures de température. Le dispositif peut après cette partie d'initialisation appliquer pour chaque nouvelle mesure acquise, les étapes suivantes de la partie de filtrage des mesures.

A l'étape 33, le dispositif acquiert une nouvelle mesure de température T(i). Il calcule la moyenne Moy(i) à l'instant i. Les moyennes des températures sont calculées deux à deux et sont utilisées afin de déterminer des pentes permettant la détection d'extremums parmi les trois dernières températures. La moyenne à l'instant i Moy(i) = [T(i-1)+T(i)]/2. Le dispositif peut déterminer maintenant la pente P(i). Cette pente P(i) correspond à la différence de la moyenne de la température calculée précédemment, à l'instant i-1 et de la dernière moyenne de la température calculée, à l'instant i. Ainsi P(i) = Moy(i-1) - Moy(i). Après avoir obtenu ces données, le dispositif peut alors déterminer un extremum pour les trois dernières mesures acquises.

A l'étape 34, le dispositif détermine le signe de la pente P(i-1) calculée précédemment et de la dernière pente P(i) calculée. Lorsque la pente P(i-1) obtenue précédemment est négative et la dernière pente P(i) obtenue est supérieure ou égale à zéro, alors le dispositif applique les étapes 40, 60 et 70 à 76, sinon il applique l'étape 35.

A l'étape 35, lorsque la pente P(i-1) obtenue précédemment est positive et la dernière pente P(i) obtenue est inférieure ou égale à zéro, le dispositif applique les étapes 50, 60, 80, 81 et 72 à 76, sinon il applique l'étape 36.

A l'étape 36, le dispositif réinitialise les paramètres de la température minimum Tmin, de la température maximum Tmax et de la dernière température acquise T(i). Lorsque, la valeur du paramètre T(i) est inférieure à la valeur du paramètre Tmin alors la valeur de Tmin est remplacée par la valeur de T(i). Et, lorsque, la valeur du paramètre T(i) est supérieure à la valeur du paramètre Tmax alors la valeur de T(i) est remplacée par la valeur de Tmax. Le dispositif revient à l'étape 33. Il acquiert une nouvelle mesure et recommence les opérations.

A l'étape 40, le dispositif a détecté un extremum. Cet extremum est un maximum. Dans ce cas, le paramètre de la température extremum Text(i) reçoit le maximum entre les trois dernières mesures de température acquises T(i), T(i-1), T(i-2). Le paramètre de la dernière pente P(i) reçoit la valeur 1.

A l'étape 60, lorsque le dernier paramètre de la température extremum Text(i) identifiée est supérieur au paramètre de la température extremum Text(i-1) précédemment identifiée, alors le dispositif applique l'étape 70 sinon il applique l'étape 80.

A l'étape 70, lorsque le paramètre de la température maximum Tmax est supérieur au paramètre de la température extremum Text(i-1) précédemment identifiée, alors le dispositif applique l'étape 71 sinon il applique l'étape 72.

A l'étape 71 le dispositif sauvegarde la température maximum détectée. Le paramètre de la température extremum Text(i-1) précédemment identifiée reçoit la valeur du paramètre de la température maximum Tmax.

A l'étape 72, lorsque la valeur absolue de la différence du dernier paramètre de la température extremum Text(i) identifiée et du paramètre de la température extremum Text(i-1) précédemment identifiée est supérieure à la valeur du seuil Delta T, alors le dispositif applique l'étape 73 sinon il applique l'étape 74.

A l'étape 73, l'extremum est alors identifié et mémorisé. Le dispositif réinitialise les valeurs des paramètres nécessaires à la simplification des mesures. Ces paramètres réinitialisés sont réinjectés dans l'algorithme à l'étape 33 afin de déterminer les extremums suivants. L'extremum identifié est transmis à l'étape 75 à l'algorithme de comptage de cycles comme il sera décrit aux figures 6a et 7a.

A l'étape 74, lorsque la valeur du paramètre SignePente = 1 et que la valeur du paramètre Text(i) est supérieure à la valeur du paramètre Text(i-1) alors le dispositif applique l'étape 76 sinon il retourne à l'étape 33. lorsque la valeur du paramètre SignePente = -1 et que la valeur du paramètre Text(i) est inférieure à la valeur du paramètre Text(i-1) alors le dispositif applique l'étape 76 sinon il applique l'étape 33. Et, lorsque la valeur du paramètre SignePente = 0 alors le dispositif applique l'étape 76 sinon il applique l'étape 33.

A l'étape 76, le dispositif réinitialise, la valeur du paramètre SignePente ainsi que la valeur du paramètre Text(i) et retourne à l'étape 33.

A l'étape 50, le dispositif a détecté un extremum. Cet extremum est un minimum. Dans ce cas, le paramètre de la température extremum Text(i) reçoit le minimum entre les trois dernières mesures de température acquises T(i), T(i-1), T(i-2). Le paramètre de la dernière pente P(i) reçoit la valeur (-1).

Après l'étape 50 le dispositif applique l'étape 60. A l'étape 80, lorsque le paramètre de la température minimum Tmin est inférieur au paramètre de la température extremum Text(i-1) précédemment identifiée, alors le dispositif applique l'étape 81 sinon il applique l'étape 72.

A l'étape 81 le dispositif sauvegarde la température minimum détectée. Le paramètre de la température extremum Text(i-1) précédemment identifiée reçoit la valeur du paramètre de la température minimum Tmin. Et, après l'étape 81, le dispositif applique l'étape 72.

Cet algorithme de simplification est alors appliqué à chaque nouvelle mesure de température. Les moyennes des températures sont calculées deux à deux et sont utilisées afin de déterminer des pentes permettant la détection d'extremums parmi les trois dernières mesures de températures.

A chaque identification d'un nouvel extremum, ce dernier est comparé à la valeur la plus faible ou la plus forte, selon l'extremum, afin d'affecter la valeur extrême à l'extremum.

Si la différence de température entre ce nouvel extremum et le précédent est supérieure au seuil de température DeltaT minimum défini par l'utilisateur, qui est ici égale à 5°C, alors cet extremum est enregistré pour constituer le profil simplifié. Dans le cas contraire l'extremum est mémorisé temporairement pour la comparaison avec le prochain extremum identifié.

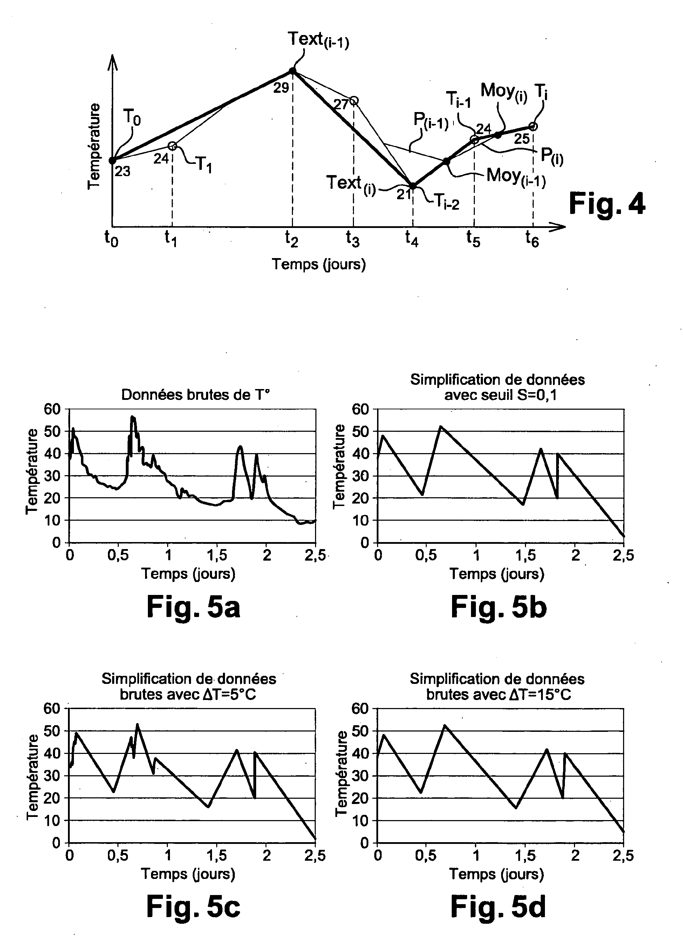

La figure 4 montre de manière explicite l'application de l'algorithme de la figure 3. Elle montre un graphe dont l'abscisse représente le temps en jours où les valeurs sont mesurées et l'ordonnée la mesure de la température en degré celsius.

A l'instant t0 et t1, le dispositif initialise les paramètres de température de l'algorithme. Il considère la valeur de la température T0 mesurée à l'instant t0 comme étant le premier extremum détecté.

L'exemple de la figure 4 montre l'application de l'algorithme de simplification des données de la figure 3, aux trois dernières mesures acquises. A l'instant i représentée par t6, le dispositif acquiert une nouvelle mesure de température T(i) qui est égale à 25 degrés celsius. Les deux températures précédemment acquises sont T(i-1) = 24 degrés celsius, et la température T(i-2) = 21 degrés celsius.

Le dispositif calcule la moyenne Moy(i) des deux dernières températures acquises. Ici la moyenne de température Moy(i) = 24,5 degrés celsius. La moyenne de température Moy(i-1) calculée précédemment est égale à 22,5 degrés celsius.

Le dispositif calcule une pente dite précédente correspondant à la différence entre la moyenne de la mesure antérieure et de la plus ancienne mesure précédente et la moyenne des deux mesures précédentes. Le dispositif calcule la nouvelle pente P(i) = Moy(i-1) - Moy(i). La nouvelle pente P(i) est négative. Et, la pente précédente P(i-1) calculée précédemment est positive.

Dans ce cas le dispositif applique les étapes 50, 60, 80, 81 et 72 à 76 de l'algorithme de la figure 3. Il a détecté

un minimum local et il détermine ce minimum parmi les trois dernières mesures de températures transmises. Le paramètre de la température extremum Text (i) reçoit la valeur de la mesure de température la plus faible entre ces trois mesures. Dans l'exemple de la figure 4, Text(i) =21 degrés celsius.

Le dispositif détermine si la valeur absolue de la différence entre l'extremum détecté précédemment qui est ici Text(i-1) = 29 degrés celsius et l'extremum Text(i) est supérieure à 5 degrés celsius qui est le seuil DeltaT de température préalablement défini. Dans l'exemple de la figure 4, la valeur absolue de la différence entre les deux extremums détectés est égale à 8. L'extremum Text(i) est donc considéré comme un pic minimum. Ce pic minimum peut être alors transmis à l'algorithme de comptage de cycles.

La figure 5a montre des mesures brutes de températures transmises au dispositif avant l'application de l'algorithme de simplification des données. Dans l'état de la technique ces mesures brutes sont simplifiées selon un paramètre S. Ce paramètre S est un paramètre dont la valeur à déterminer est non triviale. Ce paramètre S est un paramètre non quantifiable physiquement, c'est un paramètre d'agrégation. Ce paramètre S est défini a posteriori. Il ne peut être appliqué aux mesures transmises que lorsque le profil des mesures enregistrées est complet. Un exemple de simplification des données avec ce paramètre S est montré à la figure 5b. Le paramètre S fixé ici à 0.1 correspond à un seuil DeltaT situé entre 15 et 20 degrés celsius.

Les figures 5c et 5d montrent selon différents seuils de températures DeltaT une allure des mesures simplifiées. Le remplacement du paramètre S en un paramètre physique DeltaT facilite la mise en oeuvre de l'algorithme de simplification ainsi que la compréhension de l'opérateur. L'opérateur est alors apte avec un paramètre physique à choisir un seuil DeltaT adéquat par rapport au type de filtrage désiré. Ce type de filtrage permet d'extraire des mesures transmises, les demi-cycles dont la différence de température est supérieure au seuil DeltaT défini.

Comme le montre les figures 5c et 5d, plus la valeur du seuil DeltaT est important plus le nombre d'extremums détectés est faible. Le nombre de mesures transmises et simplifiées diminue en fonction de l'augmentation de la valeur du seuil DeltaT. Ainsi avec un seuil DeltaT de 5 degrés celsius le nombre de mesures restant après le filtrage est largement supérieur au nombre de mesures restant pour un seuil DeltaT de 15 degrés celsius.

Dans un exemple, les mesures transmises par le capteur au bout de quelques jours sont de l'ordre de 9546 mesures. Dans ce cas, en appliquant l'algorithme de simplification des données avec un seuil DeltaT de 5 degrés celsius aux mesures transmises, le nombre de mesures restantes après filtrage est de 709 mesures. Lorsque le seuil DeltaT est de 15 degrés celsius, alors le nombre de mesures restantes après filtrage est de 350. Pour le même nombre de données et un paramètre S fixé à 0,1, le nombre de mesures restantes après filtrage est égal à 333.

Les figures 6a et 6b et les figures 7a et 7b montrent deux cas possibles dé détection de cycles par l'algorithme de comptage de cycles. L'algorithme de comptage de cycles embarqué est appliqué à chaque nouvel extremum identifié comme étant un pic minimum ou un pic maximum par l'algorithme de simplification des données. L'extremum détecté constitue un demi cycle avec le pic minimum ou le pic maximum précédent.

L'algorithme de comptage de cycles comporte trois paramètres, notamment un paramètre de différence de température $\Delta T$ entre deux extremums consécutifs formant le demi cycle, une température moyenne du demi cycle MoyT, un temps de rampe du demi cycle tramp.

L'algorithme de comptage de cycles est une fonction récursive. Par conséquent, pour les besoins en temps réel ainsi qu'en taille mémoire vive, trois mémoires tampon tournantes 5a, 5b, 5d, une par paramètre, sont utilisées pour stocker les demi cycles, comme montré à la figure 1. La mémoire tampon 5a reçoit le paramètre de différence de température $\Delta T$, la mémoire tampon 5b reçoit le paramètre de température moyenne et la mémoire tampon 5c reçoit le paramètre de temps de rampe. Dans un mode de réalisation préféré, ces trois mémoires tampons peuvent stocker jusqu'à dix demi-cycles consécutifs. La taille de ces mémoires tampons peut être ajustée selon l'application.

Des tests effectués sur de nombreux profils de température ont permis de mettre en évidence un rendement optimal de l'algorithme de comptage de cycles, lors d'utilisation de mémoire tampon ayant une profondeur de dix demi-cycles. En effet, aucun demi cycle n'a été perdu avec l'utilisation de telles mémoires tampons.

Pour déterminer un cycle, l'algorithme de comptage de cycles doit nécessairement vérifier si les deux conditions suivantes sont respectées. La première des conditions est d'avoir au moins deux demi-cycles stockés dans la mémoire tampon. La seconde des conditions est d'avoir une différence de température $\Delta T$ du nouveau demi cycle supérieure à celle du demi cycle précédent. La différence de températures $\Delta T$ est la valeur absolue de la différence des températures des extremums détectés, formant le demi-cycle.

Lorsque l'une de ces deux conditions n'est pas respectée, alors le dispositif stocke les demi-cycles dans les mémoires tampons tournantes. Si ce cas se répète plus de dix fois consécutivement, alors le plus ancien demi-cycle est écrasé par le nouveau et les différents pointeurs sont remis à jour pour gérer le débordement du stockage dans les mémoires tampons tournantes.

La figure 6a montre un premier cas possible d'apparition de cycles dans les extremums détectés. L'ordonnée du graphe de la figure 6 représente la température des extremums et l'abscisse représente le temps en jours où lesdits extremums ont été obtenus.

La figure 6a montre un premier demi-cycle D1 formé par les extremums E1 et E2, un deuxième demi-cycle D2 formé par les extremums E2 et E3 et un troisième demi cycle D3 formé par les extremums E3 et E4.

Dès la détection de deux demi-cycles successif dans la mémoire tampon, tel que le premier demi-cycle D1 et le deuxième demi-cycle D2, l'algorithme de comptage de cycles vérifie la deuxième condition. Pour chacun des demi-cycles D1 et D2, il calcule la différence de température $\Delta T$. Pour le premier demi-cycle D1, la différence de température $\Delta T1 = |T2 - T1|$. Pour le deuxième demi-cycle D2, la différence de température $\Delta T2 = |T3 - T2|$. Dans l'exemple de la figure 6a, la différence de température $\Delta T1$ du premier demi-cycle D1 est supérieure à la différence de température $\Delta T2$ du deuxième demi-cycle D2. De ce fait, la deuxième condition n'est pas respectée. Ceci entraîne que le dispositif stocke les deux demi-cycles dans les mémoires tampons tournantes.

L'algorithme de comptage de cycles acquiert un troisième demi-cycle D3. Il calcule la différence de température $\Delta T3 = |T4 - T3|$ dudit troisième demi-cycle D3. Comme la première condition est respectée puisqu'il y a plus de deux demi-cycles stockés dans les mémoires tampons tournantes, alors l'algorithme vérifie la deuxième condition. Dans l'exemple de la figure 6a, la différence de température $\Delta T2$ du deuxième demi-cycle D2 est inférieure à la différence de température $\Delta T3$ du troisième demi-cycle D3. Dans ce cas, la deuxième condition est respectée. De ce fait, le deuxième demi-cycle D2 est comptabilisé comme étant un cycle.

Dans ce cas, les extremums E2 et E3 du deuxième demi-cycle sont supprimés, comme le montre la figure 6b, et les extremums E1 et E4 sont raccordés. Et, pour chaque nouveau extremum produit, l'algorithme de comptage de cycles applique les opérations précédemment décrites.

La figure 7a montre un deuxième cas possible d'apparition de cycles dans les extremums détectés. L'algorithme de comptage de cycles applique les mêmes conditions de détermination de cycles que dans l'exemple de la figure 6a. De même que dans la figure 6a, l'algorithme compte le demi-cycle D2 comme étant un cycle.

De manière générale, le principe de comptage d'un cycle comme montré dans les figures 6a et 7a utilise les quatre extremums E1, E2, E3 et E4 successifs détectés par l'algorithme de simplification des données. Le dispositif détermine les trois demi-cycles D1, D2 et D3 formé respectivement par les extremums E1 et E2, E2 et E3 et E3 et E4. Il calcule successivement pour chaque demi-cycle D1, D2 et D3 respectivement une différence de température $\Delta T1$, $\Delta T2$ et $\Delta T3$.

Lorsque $\Delta T2 \leq \Delta T1$ et $\Delta T2 \leq \Delta T3$ autrement dit lorsque la différence de température $\Delta T2$ est inférieure ou égale aux deux différences de température $\Delta T1$ et $\Delta T3$ alors le dispositif a détecté la présence d'un cycle. Le cycle représenté par les extremums E2 et E3 est compté par l'algorithme de comptage de cycle et envoyé vers l'algorithme de calcul de dommage en vue du traitement. Les extremums E2 et E3 sont éliminés. Et, les deux extremums E1 et E4 situés de part et d'autre du cycle éliminé sont raccordés. Sinon, le dispositif décale d'une unité le rang des extremums considérés et applique à nouveau le test précédent. Cette procédure est renouvelée jusqu'au dernier point d'extremum détecté. Une fois cette opération réalisée, les demi-cycles restants constituent le résidu.

Les figures 6b et 7b montrent respectivement le raccordement des extrémités E1 à E4, des figures 6a et 7a.

Dès que l'algorithme a compté un cycle, le dispositif transmet ce cycle à l'algorithme de calcul de dommage. Ce dernier convertit le cycle en une valeur d'endommagement du système. Cet algorithme est destiné à l'estimation de la durée de vie consommée du système sous surveillance. Pour mettre en oeuvre cet algorithme, le dispositif comporte une mémoire contenant une matrice de cycles à défaillances qui est, de préférence, intégrée dynamiquement dans le dispositif, lors de la configuration précédant la surveillance.

Pour déterminer cette mémoire contenant la matrice de cycles à défaillances, on considère dans un exemple que chaque cycle thermique entraîne une déformation sur le système à surveiller ainsi que sur les composants et les soudures du système. De ce fait, au bout d'un certain nombre de cycles thermiques, mécaniquement, la fonctionnalité du système est détruite. Cette destruction est ainsi liée à la fois à la différence de température du cycle, à la nature des matériaux, à la soudure. Par conséquent, la mémoire contenant la matrice de cycles à défaillances tient compte de tous ces éléments précités du système à surveiller, lors de sa mise en oeuvre. Elle est obtenue par des résultats de simulation ou par des résultats expérimentaux. Toute mémoire contenant la matrice de cycles à défaillances est spécifique à chaque système à surveiller. Cette mémoire contenant la matrice de cycles à défaillances est une mémoire non volatile.

Un exemple de mémoire contenant la matrice de cycles à défaillances est montré à la figure 8. Cette mémoire préconfigurée est un tableau de valeurs 100 rectangulaires, disposées en lignes 101 horizontales et en colonnes 102 verticales. Les lignes 101 représentent par leur adresse une valeur moyenne d'un cycle. Les colonnes 102 représentant par leur adresse une différence des valeurs formant le cycle. L'intersection des lignes 101 et des colonnes 102 fournit un nombre 103 de cycles à défaillances.

Dans l'exemple de la figure 8, la mémoire contenant la matrice de cycles à défaillances comporte 11 colonnes 102 et 11 lignes 101. Cette mémoire contenant la matrice de cycles à défaillances a comme paramètres la différence de température $\Delta T$ du cycle et la température moyenne MoyT du cycle.

Le paramètre de temps de rampe a été volontairement ignoré dans la détermination de la mémoire contenant la matrice de cycles à défaillances. Du fait que c'est le paramètre qui possède l'impact le plus faible vis-à-vis des deux autres sur le nombre de cycles à défaillance de la carte.

Ainsi, lorsqu'un cycle est identifié, le résultat de simulation correspondant à la différence de température et à la température moyenne les plus proches de ceux du cycle est utilisé. La durée de vie consommée est alors calculée à chaque nouveau cycle ou demi-cycle résiduel à l'aide de la relation :

$$\text{Durée de vie consommée (en \%)} = 100 \times \sum endommagements$$
$$= 100 \times \sum \frac{1}{nombre\ de\ cycles\ à\ défaillances}$$

Le calcul de la durée de vie consommée peut être effectué sur le nombre de cycles de vie $\sum \frac{1}{nombre\ de\ cycles\ à\ défaillances}$ ou sur l'endommagement $\Sigma$ *endommagements* et donne la possibilité d'intégrer également des résultats issus de simulations par éléments finis, analytiques ou de tests expérimentaux.

Cependant, l'algorithme de comptage de cycles génère la perte de certains demi-cycles. Alors que le calcul des dommages s'effectue en fonction de simulations dont les résultats donnent un nombre de cycles entiers. Ainsi, pour que l'estimation de l'endommagement ait un sens physique, seuls les cycles complets devraient être utilisés. Le résultat du calcul sur la vie consommée d'un système surveillée par le dispositif est donc optimiste dans ce cas.

Pour encadrer le résultat réel, un second calcul est également effectué en intégrant les demi-cycles résiduels dans le premier calcul. La durée de vie consommée par un de ces demi-cycles est considérée comme étant celle générée par un cycle complet, ce qui génère un endommagement supérieur à l'endommagement réel pour chacun d'eux.

L'estimation de la durée de vie consommée est ainsi bornée par ces deux résultats pessimiste et optimiste, qui peuvent être affichés tour à tour par l'utilisation des boutons poussoirs du dispositif.

Pour, par exemple, un cycle ayant une différence de température ΔT égale à 30 degrés celsius et une température moyenne de -30 degrés celsius, l'algorithme de calcul détermine, sur la mémoire contenant la matrice de cycles à défaillances de la figure 8, la valeur d'endommagement de ce cycle. Cette valeur d'endommagement est obtenue en calculant l'inverse du nombre de cycles à défaillances 103 contenu dans la mémoire, à l'intersection de ces deux paramètres. Elle est ici égale à 1/65535. Il faut donc 65535 cycles pour détruire le système à surveiller. Le pourcentage d'endommagement de ce cycle est 100×(1/65535)%. Le dispositif incrémente ce pourcentage dans la durée de vie consommée du système. Et, lorsque la durée de vie consommée est égale à 100%, le système est détruit.

Dans la description, l'estimation de la durée de vie du système représentant une carte électronique a été restreinte à la surveillance des cycles thermiques intervenant dans le calcul de fiabilité des joints de brasure. Il est bien évident que d'autres modes de défaillance peuvent intervenir dans la fiabilité d'une carte. Les algorithmes de l'invention utilisés ici sont génériques et sont applicables à d'autres grandeurs physiques. Ils ne requièrent que des résultats de simulations qui sont directement utilisables par le dispositif après la phase de configuration.

L'avantage de l'invention est d'utiliser ici la physique de la défaillance afin d'obtenir un résultat de fiabilité plutôt que de se fonder sur des résultats statistiques de fiabilité de composants qui nécessitent une longue période de retour d'expérience. Les algorithmes intégrés au dispositif ont permis d'effectuer de la maintenance prédictive par l'affichage, en temps réel, de l'état de santé de cartes électroniques sous surveillance.

Dans une variante, le capteur de mesure de grandeur environnementale peut être une jauge de contrainte permettant de fournir au dispositif des données sur la déformation d'une structure soumis à des contraintes, par exemple l'aile d'un avion. En fonction du profil de déplacement maximum admissible et du profil de contrainte maximum admissible, des résultats de simulation définissent une mémoire contenant la matrice de cycles à défaillances. Les algorithmes de l'invention permettent de calculer la fatigue de la structure, en temps réel. Ainsi dans des conditions de temps dramatiques et lorsque la structure de l'aile de l'avion a subi des dommages, ce dernier est automatiquement décelé.

Dans une variante, le capteur de mesure de grandeur environnementale peut être un accéléromètre permettant de fournir au dispositif des données sur les vibrations d'une structure ou d'une carte électronique soumise à des contraintes. En fonction des énergies maximum admissibles réparties dans le spectre fréquentiel du profil vibratoire et du profil de contrainte maximum admissible, des résultats de simulation définissent une mémoire contenant la matrice de cycles à défaillances. Les algorithmes de l'invention permettent de calculer la fatigue mécanique, en temps réel.

Dans une autre variante le dispositif peut comporter à la fois une jauge de contrainte ainsi qu'un capteur de température.

## Revendications

**1.** Dispositif (1) de surveillance des valeurs (8b) d'une grandeur environnementale (8a) d'un environnement environnant un système (2) comportant :

- un capteur (8) pour effectuer des mesures de ces valeurs,
- un circuit (B) pour transmettre ces mesures,
- une unité de traitement (U) comportant un microprocesseur (3) et une mémoire programme (4) pour recevoir ces mesures, et traiter ces mesures afin de déterminer une durée de vie consommée du système, cette durée de vie consommée résultant de l'environnement auquel est soumis le système,

**caractérisé en ce qu'**il comporte :

- des moyens de transmission (12), en temps réel, de chaque mesure à l'unité de traitement, et **en ce que**
- l'unité de traitement est embarquée, et comporte des moyens de simplification (13) des mesures transmises,
- des moyens de détermination (14) de cycles à partir des mesures ainsi simplifiées, et
- des moyens de calcul (15), en temps réel, d'une durée de vie consommée du système, à partir des cycles ainsi déterminés.

2. Dispositif selon la revendication 1, **caractérisé en ce que** les moyens de simplification comportent des moyens pour filtrer les mesures transmises afin de détecter des extremums.

3. Dispositif selon l'une quelconque des revendications 1 à 2, **caractérisé en ce que** l'unité de traitement comporte trois mémoires tampons (5a, 5b, 5c).

4. Dispositif selon l'une quelconque des revendications 1 à 3, **caractérisé en ce que** le capteur est un capteur de température.

5. Dispositif selon l'une quelconque des revendications 1 à 3, **caractérisé en ce que** le capteur est un accéléromètre.

6. Dispositif selon l'une quelconque des revendications 1 à 5, **caractérisé en ce que** le capteur est une jauge de contrainte.

7. Dispositif selon l'une quelconque des revendications 1 à 6, **caractérisé en ce que** l'unité de traitement comporte, dans les moyens de calcul :

- une mémoire préconfigurée (M) contenant la matrice de cycles à défaillances pour convertir les cycles déterminés en valeur d'endommagement à partir des nombres de cycles à défaillances (103) contenu dans cette matrice de cycles à défaillances,
- des moyens pour cumuler (15a) les valeurs d'endommagements, et
- des moyens pour avertir et/ou interpréter et/ou alarmer (15d, et/ou 15e, et/ou 15f) en fonction du cumul.

8. Dispositif selon la revendication 7, **caractérisé en ce que** la mémoire préconfigurée est composée de lignes (101) représentant par leur adresse une valeur moyenne du cycle et de colonnes (102) représentant par leur adresse une différence des valeurs extrêmes formant le cycle, l'intersection des lignes et des colonnes fournissant un nombre de cycles à défaillances (103), convertible en une valeur d'endommagement du cycle, qui est l'inverse du nombre de cycles à défaillances.

9. Dispositif selon la revendication 8, **caractérisé en ce qu'**il comporte des moyens d'affichage (6) permettant de visualiser sur un écran une somme des valeurs d'endommagements.

10. Procédé de fonctionnement d'un dispositif (1) de surveillance des valeurs (8b) d'une grandeur (8a) environnementale d'un environnement environnant un système (1) dans lequel,

- on effectue des mesures de ces valeurs,
- on transmet ces mesures à une unité de traitement (U),
- on traite ces mesures transmises afin de déterminer une durée de vie consommée du système, cette durée de vie résultant de l'état environnant auquel est soumis le système,

**caractérisé en ce que** le procédé comporte les étapes suivantes :

- on transmet en temps réel chaque mesure à l'unité de traitement,
- on détecte seulement des extremums temporairement locaux, maximums ou minimums, parmi les mesures transmises,

- pour chaque extremum local ainsi détecté, on recherche un cycle, un cycle étant formé par une suite de mesures se succédant d'un minimum à un maximum ou l'inverse,
- on convertit chaque cycle détecté en une valeur d'endommagement,
- on additionne les valeurs d'endommagements pour déterminer la durée de vie consommée du système.

**11.** Procédé selon la revendication 10, **caractérisé en ce que**

- pour détecter un extremum local :

- on acquiert une nouvelle mesure,
- on considère deux mesures précédentes acquises avant cette dernière mesure, ainsi qu'une mesure antérieure identifiée, elle, comme étant un extremum,
- on calcule une moyenne dite précédente des deux mesures précédentes,
- on calcule une moyenne dite nouvelle des deux dernières mesures acquises,
- on calcule une pente dite précédente correspondant à la différence entre la moyenne de la mesure antérieure et de la plus ancienne mesure précédente et la moyenne des deux mesures précédentes,
- on calcule une pente dite nouvelle correspondant à la différence de la moyenne précédente et de la moyenne nouvelle,
- on produit un extremum maximum, lorsque le signe de la pente précédente est négatif et le signe de la pente nouvelle est positif,
- sinon, on produit un extremum minimum,
- on valide cet extremum produit, lorsque la différence entre cet extremum produit et l'extremum antérieur est supérieure à une valeur donnée de la grandeur environnementale à surveiller,
- sinon, on mémorise temporairement l'extremum produit pour servir à titre d'extremum antérieur dans une comparaison avec un prochain extremum.

**12.** Procédé selon l'une quelconque des revendications 10 à 11, **caractérisé en ce que**

- on définit qu'un demi-cycle est formé par deux extremums validés consécutifs,
- lorsque au moins deux demi-cycles sont stockés dans des mémoires tampons, et que
- la différence des extremums constituant un dernier demi-cycle est supérieure à la différence des extremums constituant un demi-cycle précédent,
- alors on comptabilise le demi-cycle précédent comme étant un cycle,
- on supprime ce cycle comptabilisé, des demi-cycles,
- sinon, ces deux demi-cycles sont stockés dans les mémoires tampons.

**13.** Procédé selon l'une quelconque des revendications 10 à 12, **caractérisé en ce que** pour convertir un cycle en une valeur d'endommagement :

- on calcule une moyenne des extremums constituant un cycle comptabilisé,
- on calcule une différence des extremums constituant le cycle,
- on lit au moyen d'une mémoire contenant une matrice de cycles à défaillances préalablement définie, à l'intersection de la moyenne du cycle représentant par leur adresse des lignes de la mémoire et de la différence des extremums du cycle représentant par leur adresse des colonnes de la mémoire, un nombre de cycles à défaillance dont on déduit par inversion la valeur d'endommagement du cycle.

**14.** Procédé selon l'une quelconque des revendications 10 à 13, **caractérisé en ce que**

- on calcule une durée de vie consommée optimiste du système en additionnant seulement les valeurs d'endommagements des cycles comptabilisés,
- on calcule une durée de vie consommée pessimiste du système en additionnant, d'une part les valeurs d'endommagements des cycles comptabilisés, et, d'autre part les valeurs d'endommagements des demi-cycles résiduels.

**EP 1 979 717 B1**

**Claims**

1. Device (1) for monitoring values (8b) of an environmental quantity (8a) of an environment surrounding a system (2), comprising:

   - a sensor (8) for carrying out measures of these values,
   - a circuit (B) for transmitting these measures,
   - a treatment unit (U) comprising a microprocessor (3) and a program memory (4) for receiving these measures, and for treating these measures in order to determine a lifetime consumed by the system, said lifetime consumed resulting from the environment to which the system is submitted, **characterized in that** it comprises:
   - real-time transmission means (12) for transmitting in real time each measure to the treatment unit, and **in that**
   - the treatment unit is embarked, and comprises simplification means (13) for simplifying the transmitted measures,
   - determination means (14) for determining cycles from the so-simplified measures, and
   - real-time calculation means (15) for calculating in real time a lifetime consumed by the system from the so-determined cycles.

2. Device according to claim 1, **characterized in that** the simplification means comprise filtration means for filtering the transmitted measures in order to detect extrema.

3. Device according to anyone of the claims 1 to 2, **characterized in that** the treatment unit comprises three buffer memories (5a, 5b, 5c).

4. Device according to anyone of the claims 1 to 3, **characterized in that** the sensor is a temperature sensor.

5. Device according to anyone of the claims 1 to 3, **characterized in that** the sensor is an accelerometer.

6. Device according to anyone of the claims 1 to 5, **characterized in that** the sensor is a strain gauge.

7. Device according to anyone of the claims 1 to 6, **characterized in that** the treatment unit comprises, in the calculation means:

   - a preconfigured memory (M) containing the matrix of failure cycles for converting the determined cycles into damage value from numbers of failure cycles (103) contained in this matrix of failure cycles,
   - accumulation means (15a) for accumulating the damage values, and
   - means for warning and/or interpreting and/or alarming (15d, and/or 15e, and/or 15f) according to the accumulation.

8. Device according to claim 7, **characterized in that** the preconfigured memory is composed of lines (101), representing through their address an average value of the cycle, and of columns (102), representing through their address a difference of the extreme values forming the cycle, the intersection of lines and columns providing a number of failure cycles (103) that can be converted into a damage value of the cycle, which is the inverse of the number of failure cycles.

9. Device according to claim 8, **characterized in that** it comprises displaying means (6) for displaying on a screen a sum of the damage values.

10. Method for operating a device (1) for monitoring values (8b) of an environmental quantity (8a) of an environment surrounding a system (1), wherein:

    measures of these values are carried out,
    - these measures are transmitted to a treatment unit (U),
    - these transmitted measures are treated in order to determine a lifetime consumed by the system, this lifetime resulting from the environmental condition to which the system is submitted,

    **characterized in that** the method comprises the hollowing steps:

    - each measure is transmitted in real time to the treatment unit,

- only temporarily local extrema, maxima and minima, are detected among the transmitted measures,
- a cycle is searched for each so-detected local extremum, a cycle being formed by a sequence of measures succeeding one another from one minimum to one maximum, or vice versa,
- each cycle detected is converted into a damage value,
- the damage values are added for determining the lifetime consumed by the system.

11. Method according to claim 10, **characterized in that**

- for detecting a local extremum,

- a new measure is acquired,
- two preceding measures acquired before this last measure, as well as one previous measure identified as an extremum are considered,
- a said preceding average of the two preceding measures is calculated,
- a said new average of the last two acquired measures is calculated,
- a said preceding slope corresponding to the difference between the average of the previous measure and of the oldest preceding measure and the average of both preceding measures is calculated,
- a said new slope corresponding to the difference between the preceding average and the new average,
- a maximum extremum is generated, when the sign of the preceding slope is negative and the sign of the new slope is positive,
- otherwise, a minimum extremum is generated,
- this generated extremum is validated, when the difference between this generated extremum and the previous extremum is higher than a given value of the environmental quantity to be monitored,
- otherwise, the extremum generated to be used as a previous extremum in a comparison with a next extremum is temporarily memorized.

12. Method according to anyone of the claims 10 to 11, **characterized in that**

- it is defined that a half-cycle is formed by two consecutive validated extrema,
- when at least two half-cycles are stored in buffer memories, and
- when the difference of the extrema constituting a last half-cycle is higher than the difference of the extrema constituting a preceding half-cycle,
- the preceding half-cycle is then considered as a cycle,
- this cycle considered, half-cycles, is suppressed,
- otherwise, these two half-cycles are stored into the buffer memorises.

13. Method according to anyone of the claims 10 to 12, **characterized in that**, for converting a cycle into a damage value:

- an average of the extrema constituting a considered cycle is calculated,
- a difference of the extrema constituting the cycle is calculated,
- a number of failure cycles, whose damage value of the cycle is deduced by inversion, is read into a memory containing a predefined matrix of failure cycles, at the intersection of the average of the cycle representing lines of the memory through their address and of the difference of the extrema of the cycle representing columns of the memory through their address.

14. Method according to anyone of the claims 10 to 13, **characterized in that**

- an optimist lifetime consumed by the system is calculated by adding only the damage values of the cycles considered,
- a pessimist lifetime consumed by the system is calculated by adding on the one hand the damage values of the cycles considered and on the other hand the damage values of the residual half-cycles.

**Patentansprüche**

1. Vorrichtung (1) zum überwachen von Werten (8a) einer Umweltgröße (8a) einer ein System (2) umgebenden Umwelt, mit

- einem Messfühler (8) zum Durchführen von Messungen dieser Werte,
- einer Schaltung (B) zum übertragen dieser Messungen,
- einer Verarbeitungseinheit (U) mit einem Mikroprozessor (3) und einem Programmspeicher (4) für die Aufnehmung dieser Messungen, und für die Verarbeitung dieser Messungen, um eine vom System verbrauchten Lebensdauer zu bestimmen, wobei diese verbrauchte Lebensdauer aus der umwelt resultiert, die das System beansprucht,

**dadurch gekennzeichnet ist, dass** sie umfasst:

- Echtzeitübertragungsmittel (12) zum Übertragen jeder Messung in Echtzeit zur verarbeitungseinheit, und dass
- die Verarbeitungseinheit eine sordverarbeitungseinheit ist, und Vereinfachungsmittel (13) zum Vereinfachen der übertragenen Messungen umfasst,
- Bestimmungsmittel (14) zum Bestimmen von Zyklen aus den **dadurch** vereinfachten Messungen, und
- Echtzeitberechnungsmittel (15) zum Berechnen einer vom System verbrauchten Lebensdauer in Echtzeit aus den **dadurch** bestimmten Zyklen.

2. Vorrichtung nach Anspruch 1, **dadurch gekennzeichnet, dass** die Vereinfachungsmittel Filtermittel zum Filtern der übertragenen Messungen umfassen um Extremwerte festzustellen.

3. Vorrichtung nach einem der Ansprüche 1 bis 2, **dadurch gekennzeichnet, dass** die Verarbeitungseinheit drei Zwischenspeicher (5a, 5b, 5c) umfasst.

4. Vorrichtung nach einem der Ansprüche 1 bis 3, **dadurch** gekennzeichet, dass der Messfühler einen Temperaturfühler ist.

5. vorrichtung nach einem der Ansprüche 1 bis 3, **dadurch gekennzeichnet, dass** der Messfühler einen Beschleunigungsmesser ist.

6. Vorrichtung nach einem der Ansprüche 1 bis 5, **dadurch gekennzeichnet, dass** der Messfühler einen Dehnungsmessstreifen ist.

7. Vorrichtung nach einem der Ansprüche 1 bis 6, **dadurch gekennzeichnet, dass** de Verarbeitungseinheit in den Berechnungsmitteln umfasst:

- einen vorkonfigurierten Speicher (M), einhaltend die Störungszyklusmatrix, zum umwandeln der bestimmten Zyklen in Beschädigungswerte aus den Störungszykluszahlen (103) in dieser Störungszyklusmatrix,
- Summierungsmittel (15a) zum Summieren der Beschädigungswerte, und
- Mittel zum Warnen und/oder zum Auswerten und/oder Alarmieren (15d und/oder 15e und/oder 15f) in Abhängigkeit von der Summierung.

8. Vorrichtung nach Anspruch 7, **dadurch gekennzeichnet, dass** der vorkonfigurierte Speicher aus Zeilen (101), die durch ihre Adresse einen Mittelwert des Zyklus darstellen, und aus Spalten, die durch ihre Adresse einen Unterschild der den Zyklus bildenden Extremwerte darstellen, besteht, wobei die Kreuzungsstelle der Zeilen und der Spalten eine Storungszykluszahl (103) ergibt, die in einen Beschädigungswert des Zyklus umwandelt werden kann, welcher der Kehrwert der Störungszykluszahl ist.

9. Vorrichtung nach Anspruch 8, **dadurch gekennzeichnet, dass** sie Anzeigemittel (6) zum optischen Anzeigen einer Summe der Beschädigungswerte auf einem Bildschirm umfasst.

10. Verfahren zum Betreiben einer Vorrichtung (1) zum Überwachen der Werte (8b) einer Umweltgröße (8a) einer ein System (2) umgebenden Umwelt, in dem

- die Messungen dieser Werte durchgeführt werden,
- diese Messungen zu einer Verarbeitungseinheit (U) überragen werden,
- diese übertragene Messungen zum Bestimmen einer vom System verbrauchten Lebensdauer verarbeitet werden, wobei diese Lebensdauer aus der Umweltverhältnisse resultiert, die das System beanspruchen,

**dadurch** gekenntzeichnet, dass das Verfahren die folgende Schritte umfasst:

- jede Messung in Echtzeit zur Verarbeitungseinheit überträgen wird,
- nur vorläufig lokale Extremwerte, maximale Extremwerte und minimale Extremwerte, unter den übertragenden Messungen festgestellt werden,
- für jeden so festgestellten lokalen Extremwert ein Zyklus gesucht wird, wobei ein Zyklus aus einer Folge von aufeinander folgenden Messungen von einem minimalen Extremwert zu einem maximale Extremwert, oder umkehrt, besteht,
- jeder festgestellte Zyklus in einen Beschädigungswert umwandelt wird,
- die Beschädigungswerte zum Bestimmten der vom System verbrauchten Lebensdauer addiert werden.

**11.** Verfahren nach Anspruch 10, **dadurch gekennzeichnet, dass**

- für die Feststellung eines lokalen Extremwerts:

  - eine neue Messung erzielt wird,
  - zwei vorige Messungen, erzielt vor dieser letzten Messung, sowie eine frühere Messung, identifiziert als ein Extremwert, berücksichtigt werden,
  - ein genannter voriger Mittelwert der beiden vorigen Messungen berechnet wird,
  - ein genannter neuer Mittelwert der beiden letzten erzielten Messungen berechnet wird,
  - eine genannte vorige Steigung, entsprechend dem unterschild zwischen dem Mittelwert der früheren Messung und der vormaligsten vorigen Messung und dem Mittelwert der beiden vorigen Messungen, berechnet wird,
  - eine genannte neue Steigung, entsprechend dem Unterschied des vorigen Mittelwerts und des neuen Mittelwerts, berechnet wird,
  - ein maximaler Extremwert erzeugt wird, wenn das Vorzeichen der vorigen Steigung negativ ist und das Vorzeichen der neuen Steigung positiv ist,
  - sonst wird ein minimaler Extremwert erzeugt,
  - dieser erzeugte Extremwert gültig gemacht wird, wenn der Unterschied zwischen dieses erzeugten Extremwerts und des früheren Extremwerts größer ist, als ein gegebener wert der zu überwachenden Umweltgröße,
  - sonst wird der erzeugte Extremwert zum Dienen als früherer Extremwert in einem Vergleich mit einem nächsten Extremwert vorläufig gespeichert.

**12.** Verfahren nach einem der Ansprüchen 10 bis 11, **dadurch gekennzeichnet, dass**

  - es bestimmt wird, dass ein Halbzyklus aus zwei gültig gemachten aufeinander folgenden Extremwerten besteht,
  - der vorige Halbzyklus als ein Zyklus berücksichtigt wird,
  - wenn mindestens zwei Halbzyklen in zwischenspeichern gespeichert werden, und
  - wenn der Unterschild der einen letzten Halbzyklus bildenden Extremwerte größer ist, als der Unterschied der einen vorigen Halbzyklus bildenden Extremwerte,
  - diese berücksichtigte Zyklus, Halbzyklen, wegfällt,
  - sonst werden diese beide Halbzyklen in den Zwischenspeichern gespeichert.

**13.** Verfahren nach einem der Ansprüche 10 bis 12, **dadurch gekennzeichnet, dass** für die Umwandlung eines Zyklus in einen Beschädigungswert:

  - ein Mittelwert der einen berücksichtigten Zyklus bildenden Extremwerte berechnet wird,
  - ein Unterschied der den Zyklus bildenden Extremwerte berechnet wird,
  - eine Störungszykluszahl, woraus die Beschädigungswert des Zyklus durch eine Umkehrungeoperation abgeleitet wird, in einer eine vorbestimmte Störungszyklusmatrix enthaltenden Speicher an der Kreuzungsstelle des durch ihre Adresse Zeilen des Speichers darstellenden Mittelwerts des Zyklus und des Unterschieds der durch ihre Adresse Spalten des Speichers darstellenden Extremwerte des Zyklus gelesen wird.

**14.** Verfahren nach einem der Ansprüche 10 bis 13, **dadurch gekennzeichnet, dass**

  - eine vom System verbrauchte optimistische Lebensdauer berechnet wird, indem nur die Beschädigungswerte der berücksichtigten Zyklen addiert werden,
  - eine vom System verbrauchte pessimistische Lebensdauer berechnet wird, indem zum einen die Beschädigungswerte der berücksichtigten Zyklen und zum anderen die Beschädigungswerte der residualen Halbzyklen

addiert werden.

**Fig. 1**

- Transmission — 12
- Simplification / Filtrage — 13
- Comptage des cycles — 14
- Dommage — 15
  - 15a
  - 15b
  - Seuil — 15c
  - 15d
  - 15e
  - 15f
  - Alarme
- Affichage — 16

Système à Surveiller — 2

**Fig. 2**

Données de Température fournies par le capteur — 20

Simplification des données en temps réel — 21

Détermination des cycles en temps réel — 22

Pour chaque cycle, estimation d'un endommagement unitaire — 23

Somme des endommagements unitaires pour obtenir un % d'endommagement global — 24

Affichage du % d'endommagement global pessimiste — 25

Affichage du % d'endommagement global optimiste — 26

Algorithme de filtrage
des données relevées — 30

Première donnée relevée
Ti=Ti-1=Ti-2=T0, Textremum (i-1)=T0, Tmin=T0
Tmax=T0, DeltaT=5°C, signePente=0 — 31

**Fig. 3**

Initialisation

Deuxième donnée relevée
T(i-2)=T(i-1), T(i-1)=T(i) et Ti=T1, Moy(i-1)=T0,
Textremum (i)=T1, Pente (i-1)=T1-T0 — 32

— 33

Donnée suivantes relevées
Textremum (i-1)=Textremum (i), T(i)=T(j) pour j allant de 2 à n,
moy(i)=(Ti-1+Ti)/2, Pente(i)=Moy(i-1) - Moy(i),

34

35

Si pente(i-1)<0 et Pente(i)≥0 → Non → Si pente(i-1)>0 et Pente(i)≤0 → Non → Ti<Tmin →Tmin=Ti,
Ti>Tmax→ Ti=Tmax

Oui — Oui

36

Détection d'un maximum local
Textremum(i)=max(T(i), T(i-1) T(i-2))
Pente (i)=1

Détection d'un minimum local
Textremum(i)=min(T(i), T(i-1) T(i-2))
Pente (i)=-1 — 50

40  70

Si Textremum (i)>Textremum (i-1) — 60

Oui  Non

Si Tmax >Textremum(i-1)

Si Tmin < Textremum(i-1) — 80

Oui  Oui

Sauvegarde du Pic Maximum
Textremum(i-1)=Tmax

Non  Non

Sauvegarde du Pic Minimum
Textremum(i-1)=Tmin

71

Si |Textremum(i-1) - Textremum(i)| > DeltaT — 72

81  74

Non

Oui  Non

Pic maximum ou Pic minimum identifié
Mémirisation de T(extremum (i-1),
Tmax=Textremum (i),Tmin=Textremum(i)
T(i-2)=T(i-1), T(i-1)=T(i), Pente(i-1)=Pente(i),
Moy(i-1)=Moy(i)

Si signePente=1 et Textremum(i)>Textremum(i-1)
ou signePente=-1 et Textremum(i)<Textremum(i-1)
ou signePente=0

Oui

Ce nouvel extremum remplace le précédent
SignePente= signe(Textremum(i)-Textremum(i-1))
Textremum(i-1)=Textremum(i)

Algorithme de comptage de cycle

73

filtrage  75  76

**Fig. 4**

Données brutes de T°

**Fig. 5a**

Simplification de données
avec seuil S=0,1

**Fig. 5b**

Simplification de données
brutes avec ΔT=5°C

**Fig. 5c**

Simplification de données
brutes avec ΔT=15°C

**Fig. 5d**

## Fig. 6a

## Fig. 6b

## Fig. 7a

## Fig. 7b

| $T_{moy}$ \ $\Delta T$ | 30°C | 45°C | 60°C | 75°C | 90°C | 105°C | 120°C | 135°C | 150°C | 165°C | 180°C |
|---|---|---|---|---|---|---|---|---|---|---|---|
| -30°C | 65535 | 39968 | 16612 | 9819 | 5950 | 3906 | 2713 | 1967 | 1475 | 1138 | 898 |
| -15°C | 65535 | 31763 | 13907 | 7906 | 4842 | 3201 | 2238 | 1633 | 1232 | 555 | 757 |
| 0°C | 65535 | 25190 | 11250 | 6023 | 3760 | 2511 | 1775 | 1307 | 955 | 777 | 621 |
| 15°C | 49567 | 17630 | 9037 | 5102 | 3194 | 2146 | 1524 | 1126 | 860 | 674 | 540 |
| 30°C | 40401 | 14723 | 6753 | 3994 | 2538 | 1725 | 1237 | 922 | 710 | 560 | 452 |
| 45°C | 29554 | 10830 | 5545 | 3152 | 2027 | 1396 | 1011 | 760 | 590 | 469 | 380 |
| 60°C | 22776 | 8687 | 4380 | 2365 | 1562 | 1094 | 804 | 612 | 480 | 385 | 315 |
| 75°C | 15086 | 5724 | 3299 | 1844 | 1243 | 884 | 657 | 506 | 401 | 324 | 267 |
| 90°C | 14345 | 5694 | 2972 | 1792 | 1186 | 837 | 619 | 474 | 374 | 302 | 248 |
| 105°C | 10254 | 4192 | 2300 | 1389 | 940 | 675 | 505 | 393 | 312 | 254 | 210 |
| 120°C | 9381 | 3869 | 2076 | 1278 | 861 | 616 | 461 | 358 | 285 | 232 | 192 |

101

103

100

102

## Fig. 8

**EP 1 979 717 B1**

**RÉFÉRENCES CITÉES DANS LA DESCRIPTION**

**Documents brevets cités dans la description**

- FR 2844902 A1